Europäisches Patentamt

European Patent Office

Office européen des brevets

(19)

(11) Publication number: **0 133 986**
**A2**

(12) # EUROPEAN PATENT APPLICATION

(21) Application number: **84109089.7**

(22) Date of filing: **31.07.84**

(51) Int. Cl.⁴: **B 01 D 17/04**

(30) Priority: **01.08.83 US 519185**

(43) Date of publication of application: **13.03.85**
**Bulletin 85/11**

(84) Designated Contracting States: **DE FR GB IT**

(71) Applicant: **The Graver Company, 2720 U.S. Highway 22, Union New Jersey 07083 (US)**

(72) Inventor: **O'Connell, Robert T., 49 Birchwood Drive, North Arlington New Jersey 07032 (US)**

(74) Representative: **Groening, Hans Wilhelm, Dipl.-Ing., Siebertstrasse 4 Postfach 860 340, D-8000 München 86 (DE)**

(54) **Method and apparatus for separating emulsions by coalescense.**

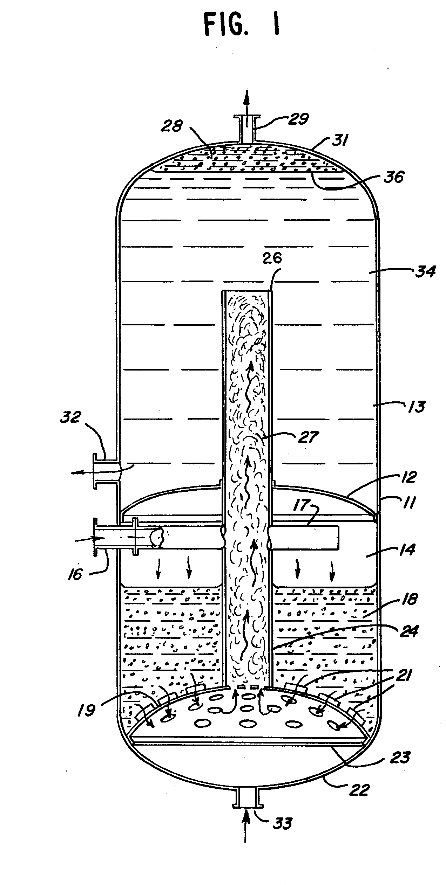

(57) A method and apparatus are provided for the separation of oil particles from an oil-in-water emulsion by coalescence followed by quiescent settling. The emulsion is passed downwardly through a particulate bed (18) of finely divided filtering and coalescence material and into a particle free coalescing space (23) in which oil particles coalesce into larger suspended drops. The liquid is then passed vertically into a quiescent settling zone (13) where the oil drops coalesce into an oil layer (28) and the remainder of the liquid is a water layer (34). For regeneration of the bed of filtering and coalescence material, a regenerating liquid is passed upwardly through the bed (18) at a sufficient velocity to achieve fluidization of the bed particles (Fig. 1).

## METHOD AND APPARATUS FOR SEPARATING
### EMULSIONS BY COALESCENCE

Background of the Invention

This invention relates to apparatus and method for the removal of oil from oil-in-water emulsions by coalescence.

Oil-in-water emulsions occur as intermediate process products or as waste products in many types of processing, including oil field operations, oil refinery operations, metals extraction, bilge pump and tanker ballast operations and heavy industry. It is desirable, in many cases to separate the oil from the water in such emulsions, either for recovery of the oil values, or for purification of the water phase for re-use, or for safer waste disposal.

It is known that suspended oil droplets may be separated from emulsions by first coalescing the droplets into larger drops and then separating the coalesced drops in a quiescent settling zone.

Coalescence is obtained by flowing the emulsion through a bed of particles of filtering and coalescing material which causes the oil droplets in the emulsion to adhere to the particle surfaces. Continuing flow of the emulsion past the oil-coated particles sweeps oil drops off the particles and into the flowing stream for further coalescence and separation in a settling zone.

The filtering and coalescing material is preferably an ion exchange resin, and most preferably an ion exchange resin as disclosed in U.S. Patent 3,729,410, the disclosure of which is incorporated herein by reference. Other filtering and coalescing materials may also be used, including ordinary sand.

Periodically, in such systems, as the filtering and coalescing material becomes oil-saturated and less effective, the flow of the emulsion is shut off so that the filtering and coalescing material can be regenerated by the flow through the bed of a regenerating liquid, such as warm water.

Prior to the instant invention, flow in most oil coalescing installations of this type has been upward by the emulsion during the coalescence portion of the cycle. In such upward flow, it is desired to avoid fluidization of the oil absorbing particles and, if the bed of particles has an unrestrained upper surface, the operation requires either relatively low fluid velocities, or relatively large or heavy particles, or both. On the other hand, restraining the upper surface of the bed, as by a screen, requires support of the screen by load bearing members capable of withstanding the anticipated differential pressures. A restraining screen also makes it difficult to clean or regenerate the bed of filtering and regeneration material.

An oil coalescing system has been used which employs a downward flow of emulsion through a bed of filtering and coalescing material during the coalescence portion of the cycle. This system employs a three layer media bed with a layer of coarse particles both above and below an intermediate layer of fine particles. Such a system reduces the effective coalescing surface area on the particles for a given size bed and also provides difficulty in the regeneration portion of the cycle because channeling of the regeneration fluid through the dense bed may leave localized areas with unregenerated particles.

## Summary of the Invention

In accordance with the present invention, an apparatus is provided for separating oil from an oil-in-water emulsion comprising a settling space and a coalescing space vertically displaced therefrom, said coalescing space having a solid particle-free collection space between an upper partition and a lower partition, said upper partition comprising a foraminous support member, a confined bed consisting essentially of finely divided filtering and coalescence material supported in said coalescing space by said foraminous support member and having an unrestrained upper surface, vertically disposed conduit means having one end in communication with said collection space at one of said partitions and another end in communication with said settling space at an intermediate level therein, inlet means to said coalescing space at a level above the upper surface of said bed of filtering and coalescing material, a first outlet means from said settling space at a level below said intermediate level therein and a second outlet means from said settling space at a level above said first outlet means.

Preferably, the finely divided filtering and coalescence material is a treated ion exchange resin, as disclosed in U.S. Patent 3,729,410. However, other known filtering and coalescence material may be used, including an untreated ion exchange resin described in U.S. Patent No. 3,800,944, and including anthracite coal or silica sand.

To provide even flow distribution of the emulsion through the bed of filtering and coalescing material, the inlet means to the coalescing space preferably comprises a distribution conduit overlying substantially all portions of the bed of filtering and coalescing material. The distribution conduit contains evenly distributed perforations for dispersing the liquid feed evenly over the surface of said bed of filtering and coalescing material; and the perforations are covered by a screen having apertures smaller in diameter than the particle diameter of the finely divided filtering and coalescence material.

The method of this invention for separating oil from an oil-in-water emulsion comprises introducing said oil-in-water emulsion into an enclosed space, flowing said emulsion downwardly from said space through a bed consisting essentially of finely divided filtering and coalescing material into a solid particle-free collection zone whereby oil particles in said oil-in-water emulsion are coalesced and said emulsion is converted into a water suspension of coalesced oil particles, flowing said water suspension vertically into a quiescent settling zone in which said coalesced oil particles collect in one portion as an oil layer, and in which water, substantially free of oil particles, collects in another portion as a water layer with an oil-water interface between said layers, and separately withdrawing oil and water from said oil and water layers.

The flow of emulsion downwardly through the bed of filtering and coalescing material is periodically terminated for regeneration of the filtering and coalescing material and for the removal of whatever suspended solids are trapped therein. The regeneration is performed by flowing a regenerating liquid, such as warm water, upwardly through the bed at sufficient velocity to fluidize the particles in said bed.

The method of this invention is unique in that it provides dense bed contact during the coalescence portion of the cycle where it is important that every portion of the flowing emulsion stream should come into contact with particle surfaces; and it provides fluidized bed contact during the regeneration portion of the cycle when it is important that regeneration be achieved as quickly as possible and important that every particle have adequate contact with the stream of regeneration fluid.

Brief Description of the Drawings

Other features and advantages of the present invention will be apparent from the following detailed descriptions of embodiments thereof, taken with the accompanying Figures in which:

Figure 1 is a vertical elevation in cross-section of the apparatus of one embodiment of the present invention,

Figure 2 is a vertical elevation in cross-section of the apparatus of another embodiment of this invention in which the coalescing space and separation space are in separate vessels,

Figure 3 is a vertical elevation in cross-section of the apparatus of another embodiment of this invention in which the separation space is at atmospheric pressure, and

Figure 4 is a vertical elevation in cross-section of the apperatus of another embodiment of this invention adapted for the separation of oil-in-water emulsions in which the oil is heavier than water.

Detailed Description of the Invention

Referring to Figure 1, cylindrical vessel 11 is vertically disposed and divided by septum 12 into upper settling space 13 and lower coalescing space 14. Inlet 16 leads to an upper portion of the coalescing space through distributor 17, which has evenly spaced orifices (not shown) on the lower edge thereof.

A lower portion of the coalescing space is filled with particulate coalescing material 18 supported by dome-shaped drain member 19 containing strainers 21. The filtering and coalescing material is substantially entirely a finely divided particulate material with particles not greater than about two millimeters in diameter. The apertures in strainers 21 and the orifices in distributor 17 are smaller in diameter than the particles of the coalescing material, and preferably no more than half as large.

Between drain member 19 and vessel bottom 22, there is a solid particle-free collection space 23 leading, at the highest portion of the dome-shaped drain member, to vertical vent pipe 24 and thence to its upper end outlet 26 at a midpoint in space 13. The vent pipe is filled with packing material 27, typically composed of glass beads, bent wire, or plastic filament packing.

Outlet 29 is located in upper end 31 of vessel 11 and outlet 32 is located in a lower portion of space 13. Space 13 contains oil-liquid interface 36, separating oil layer 28 above the interface from water layer 34 below the interface. Liquid emerging from outlet 26 is directed toward interface 36; and the coalesced oil drops in the liquid stream, aided by their buoyancy, move to the interface and become part of the oil layer thereabove.

Vessel 11 also contains inlet 33 at its lowermost portion for backwash, or regeneration, periods.

In operation, an oil-in-water emulsion to be separated into oil and water components is introduced through inlet 16 and distributor 17 into the space above bed 18, which is unconfined at its upper surface, and flows downwardly through the bed, preferably at a velocity of about 7,6 to 56,8 liter per minute per 0,093 m² of bed area.

While the emulsion flows downwardly through bed 18, the oil droplets in the emulsion adhere to and coalesce upon the particles of filtering and coalescing material. As coalescing oil droplets accumulate on the filtering and coalescing material, portions of adhered oil are swept away by the flowing liquid and are carried therein as coalesced oil globules.

The liquid emerging from bed 18 through strainer member 19 collects in solid particle-free collection zone 23 and then passes along the curved underside of dome-shaped drain member 19 to the highest portion thereof before venting through vent pipe 24, passing through the packing material therein to eliminate turbulence and to further coalesce the oil globules carried in the liquid. Typically, oil particles in the collection zone are from about 0.1 to 0.5 millimeters in diameter and those emerging from the vent pipe are from about 1 to 2 millimeters in diameter.

As the liquid emerges from upper end outlet 26 of vent pipe 24, directed toward oil-water interface 36, its velocity is sharply and suddenly reduced by the relatively large size of space 13; and the liquid becomes quiescent. In settling space 13, coalesced oil globules collect as upper layer 28; and oil therefrom is withdrawn through outlet 29. The oil withdrawal is intermittent, but may be continuous when the emulsion treated is one of high oil content.

The remaining liquid, substantially oil-free water, flows downwardly and transversely to emerge from outlet 32.

Periodically, to regenerate the filtering and coalescing material, the flow of emulsion is turned off, and outlets 29 and 32 are shut off (through valves not shown). Then regenerating liquid, generally warm water, is introduced through line 33 to pass through collection space 23 and upwardly through bed 18. The upward velocity of regenerating liquid through bed 18 is sufficient to fluidize substantially all the particles in the bed to provide maximum effectiveness in removing trapped suspended solids which impede fluid flow and tend to build up pressure. The upward velocity of liquid during regeneration is generally at least 30,3 liter per minute per 0,093 m² of bed area, and preferably from about 37,8 to about 75,7 liter per minute per 0,093 m².

The regenerating liquid passes into and through distributor 17 and out of the vessel through outlet (normally inlet) 16. The particles of coalescing material remain within the coalescing space of the vessel because the orifices in distributor 17 are smaller than the fluidized particles.

The frequency and duration of the regeneration portion of the coalescing cycle can vary over a wide range and is dependent on the nature of the emulsion treated, the nature of the coalescing material and the degree of oil removal desired. Typically, regeneration is instituted after about 8 to 24 hours of operation; and the regeneration treatment is from about 3 to 10 minutes.

In the regeneration portion of the cycle, complete removal of the oil from the particles is not desired because this would require another priming period for resaturation of the particles before stable operating conditions are obtained.

For the most effective removal of trapped suspended solids the particles, it has been found useful to increase the velocity of the backwash liquid periodically for short periods to about 150% to 300% of its normal operating value. For example, an initial regeneration liquid flow of 56,8 liter/0,093 m² of bed surface area may be increased to 25 gpm/ft² for 10 seconds during each minute of regeneration.

Alternatively, a gas may be periodically introduced into the regeneration liquid for short periods, such as 0,0566 m³/ minute • 0,093 m² of bed surface of a gas, such as air, methane, or nitrogen, may be introduced for 10 seconds during each minute of regeneration into a regeneration stream held constant at about 56,8 liter/0,093 m².

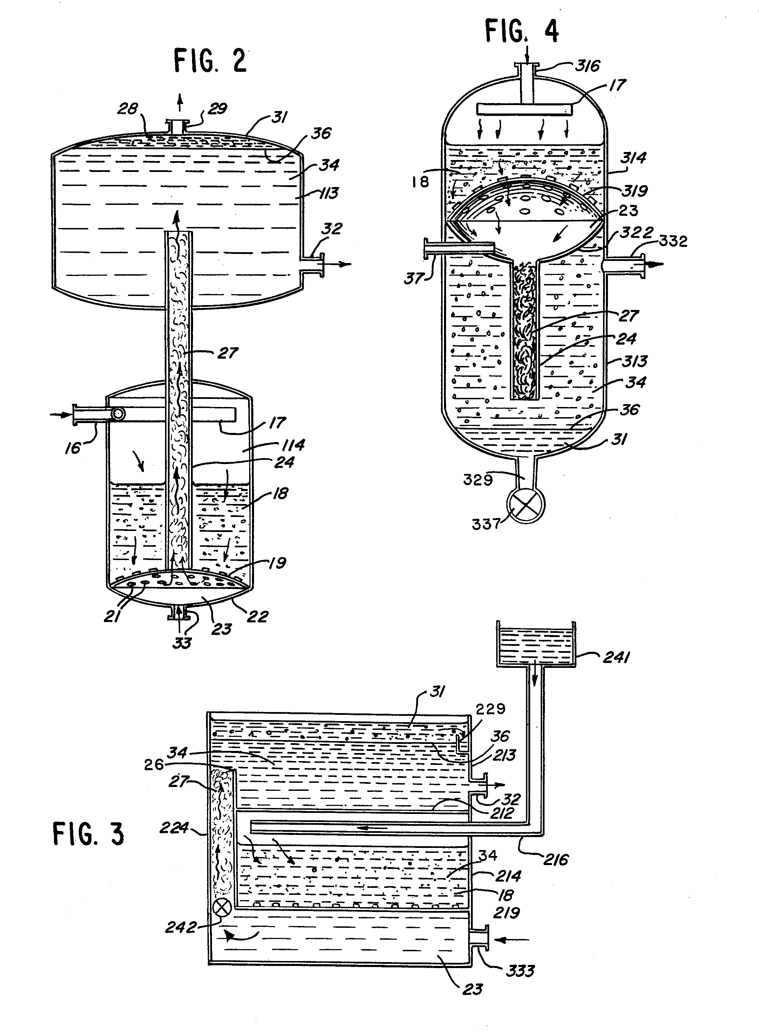

In the embodiment of Figure 2, the coalescing space and the settling space are in separate vessels, the former designated as 114 and the latter as 113. In other respects the structure and operation of the Figure 2 embodiment is similar to that of Figure 1 with the Figure 2 elements bearing the same numerals as the comparable elements of the Figure 1 embodiment.

In operation, the Figure 2 embodiment permits the separate optimum dimensioning of the coalescing space and the settling space, and particularly permits the former to be of smaller horizontal cross-sectional area than the latter. The smaller cross-sectional area of the coalescing space reduces operating costs by enabling the use of smaller quantities of filtering and coalescence material for a bed of equal depth; and the larger cross-sectional area of the settling space provides more efficient settling.

The embodiment of Figure 3 is designed to enable operation of the separation method in an open top system at substantially atmospheric pressure. In the Figure 3 system, settling space 213, open at its top, is located above coalescing space 214. Open top reservoir 241, located at a level above the other elements of the system, holds the incoming oil-in-water emulsion to be treated.

Conduit 216 leads from reservoir 241 to distributor 17 which is similar to the distributor in Figure 1. In other respects, the embodiment of Figure 3 is similar to that of Figure 1, with similar elements bearing similar numbers, with a few exceptions.

Septum 212 of Figure 3 corresponds to septum 12 of Figure 11 and drain member 219 corresponds to drain member 19 of Figure 1, except that it is not dome-shaped.

Vent pipe 224 is similar to vent pipe 24 of Figure 1, except that it is located at an edge of the coalescing space rather than being centrally located therein. Vent pipe 224 is filled with packing 24 similar to the packing 24 in Figure 1 and directs its upflowing stream to interface 36.

Outlet 29 of Figure 1 is replaced in Figure 3 by overflow channel 229 for withdrawal of oil from the oil layer; and lower inlet 233 at one side of the particle free collection space replaces inlet 33 of Figure 1. In addition, valve 242 in the lower part of vent pipe 224 and below the packing therein, serves as a cut-off of the vent pipe during the backflow, or regeneration portion of the cycle.

The operation of the Figures 3 embodiment is essentially similar to that of the Figures 1 embodiment, except that the oil-in-water emulsion enters the system under the head provided by the elevation of reservoir 241 and under no other pressure and the oil is withdrawn from channel 229, rather than through outlet 29. In addition gate valve 36 must be closed during regeneration to assure the back flow of the regeneration liquid through bed 34.

The embodiment of Figure 4 is designed for the treatment of oil-in-water emulsions in which the oil is heavier than water. In this system, coalescing space 314 is above, rather than below, settling space 313. Inlet 316 leads to distributor 17 which is similar to the same-numbered distributor of Figure 1. Dome shaped drain member 319 is generally similar to member 19 of Figure 1, except that it contains no centrally disposed opening for a vent pipe. Instead, vent pipe 324 is centrally located within the inverted dome-shaped partition 322, and contains packing material 27 similar to that of Figure 1.

The oil outlet 329 in the Figure 4 embodiment is at the bottom of the settling space and contains valve 337 to control the withdrawal of the oil phase and to assure that the level of interface 36 does not vary over too great a range. The water outlet 332 in Figure 4 is near the top of the settling space.

Inlet 333 leading directly into particle free collection zone 23 permits the periodic introduction of regenerating liquid.

Other elements of the Figure 4 embodiment are similar to those of Figure 1 and bear the same numerical designations.

In the operation of the embodiment of Figure 4, the oil-in-water emulsion containing a heavier than water oil is introduced through inlet 316 and distribution 17 into the space above bed 18. It passes through the bed as in the embodiment of Figure 1, then into particle-free collection space 23, in which oil droplets coalesce to larger drops.

The emulsion then flows along the curved surface of inverted dome partition 322 to a central portion thereof where it enters vertical conduit 24 filled with packing material 27. In the vertical conduit, coalescence continues; and the liquid stream bearing relatively large drops of oil emerges from the lower end outlet 326 of conduit 24 to intermediate level in the settling zone.

The oil drops in the stream emerging from conduit 24, being heavier than water, continue their downward flow to interface 36 between the oil and water layers. Oil is then withdrawn periodically through outlet 329, while water is withdrawn through outlet 332.

During the regeneration portion of the cycle, outlets 329 and 332 are shut off and regenerating fluid is introduced through inlet 37 to flow upwardly through bed 18 and fluidize it, as in the embodiment of Figure 1.

0133986

-13-

The invention has been described with respect to its preferred embodiments, but modifications and variations thereof will be apparent to those skilled in the art.

Claims:

1. Apparatus is provided for separating oil from an oil-in-water emulsion comprising a settling space (13) and a coalescing space (14) vertically displaced therefrom, said coalescing space (14) having a solid particle-free collection space (23) between an upper partition and a lower partition, said upper partition comprising a foraminous support member (19) a confined bed (18) consisting essentially of finely divided filtering and coalescence material supported in said coalescing space (14) by said foraminous support member (19), and having an unrestrained upper surface (21), vertically disposed conduit means (24) having one end in communication with said collection space (23) at one of said partitions and another end in communication with said settling space (13) at an intermediate level therein, inlet means (16) to said coalescing space (14) at a level above the upper surface of said bed (18) of filtering and coalescing material, a first outlet means (32) from said settling space (13) at a level below said intermediate level therein and a second outlet means (29) from said settling space (13) at a level above said first outlet means (32).

2. An apparatus in accordance with claim 1 wherein said partition (19) in communication with said one end of said vertically disposed conduit means (24) is dome-shaped and said vertically disposed conduit means (24) is centrally located therein.

3. An apparatus in accordance with claim 1 wherein said settling (13, 113, 213) is located above said coalescing space (14, 114, 214).

4. An apparatus in accordance with claim 1 wherein said settling space (313) is located below said coalescing space (314).

5. An apparatus in accordance with claim 3 wherein said settling space (13) and said coalescing space (14) are within the same vessel (11) and separated by a septum (12).

6. An apparatus in accordance with claim 3 wherein said settling space (113) and said coalescing space (114) are in different vessels and said separation space is of greater horizontal cross-sectional area than said coalescing space.

7. An apparatus in accordance with claim 3 wherein said settling step (213) is open to the atmosphere.

8. An apparatus in accordance with claim 1 wherein substantially all of said finely divided filtering and coalescence material comprises particles not greater

0133986

than about one millimeter in diameter.

9. An apparatus in accordance with claim 8 wherein said finely divided filtering and coalescence material comprises an ion exchange resin.

10. An apparatus in accordance with claim 1 wherein said finely divided filtering and coalescence material comprises silica sand.

11. An apparatus in accordance with claim 1 wherein said vertically disposed conduit means (24) contains a packing material.

12. An apparatus in accordance with claim 1 wherein an inlet (33) is provided in a lower portion of said particle-free collection space (23).

13. An apparatus in accordance with claim 1 wherein said inlet means (16) to said coalescing space comprises a distributor conduit (17) overlying substantially all portions of said filtering and coalescing material, said distributor conduit (17) containing evenly distributed perforations for dispersing a liquid feed evenly over the surface of said bed (18) of filtering and coalescing material.

14. An apparatus in accordance with claim 13 wherein the perforations in said distributor conduit (17) are covered by a screen having apertures smaller in diameter than the particle diameter of said finely divided filtering and coalescence material.

15. Method for separating oil from an oil-in-water emulsion comprising introducing said oil-in-water emulsion into an enclosed space, flowing said emulsion downwardly from said space through a bed (18) consisting essentially of finely divided filtering and coalescing material into solid particle-free collection zone (23) whereby oil particles in said oil-in-water emulsion are coalesced and said emulsion is converted into a water suspension of coalesced oil particles, maintaining a quiescent settling zone (13) at a location vertically displaced from said particle-free collection zone (23), and maintaining in said settling zone (13) an oil-water interface (36) with a layer of oil (28) on one side thereof and a layer of water (34) on the other side thereof, flowing said water suspension vertically from said collection zone (23) toward said oil-water interface (36) in said settling zone (13), collecting coalesced oil particles in said layer (28) and collecting water (34), substantially free of oil particles, water layer, and separately withdrawing oil and water from said oil and water layers (28, 34).

16. The method of claim 15 wherein said quiescent settling zone (13) is above said particle-free collection zone (23) and said oil (28) is lighter than said water (34).

17. The method of claim 16 wherein said quiescent settling zone (13) is in a substantially sealed vessel (11).

18. The method of claim 16 wherein said quiescent settling zone (213) is open to the atmosphere.

19. The method of claim 15 wherein said water suspension of coalesced oil particles is flowed within said particle-free collection zone (23) along a curved surface and thence to said quiescent settling zone (13) through a vertically disposed conduit (24) having

0133986

an entrance at a midpoint in said curved surface.

20. The method of claim 15 wherein said flow of said emulsion downwardly through said bed (18) of filtering and coalescing material is periodically terminated for regeneration of said filtering and coalescing material, and said regeneration is performed by flowing a regenerating liquid upwardly through said bed (18).

21. The method of claim 20 wherein said upward regeneration flow is at sufficient velocity to fluidize the particles in said bed (18).

22. The method of claim 15 wherein substantially all of said finely divided filtering and coalescence material comprises particles no greater than about two millimeters in diameter.

23. The method of claim 22 wherein said finely divided filtering and coalescence material comprises an ion exchange resin.

24. The method of claim 22 wherein said finely divided filtering and coalescence material comprises sand.

25. The method of claim 15 wherein said downward flow through said bed (18) of filtering and coalescing material is at a normal velocity from about 7,6 to about 56,8 liter per minute per 0,093 m² of bed area.

26. The method of claim 25 wherein said downward flow through said bed of filtering and coalescing material is intermittently increased in velocity to a level from about 1.5 to about 3 times the normal velocity.

FIG. 1

0133986

FIG. 2

FIG. 4

FIG. 3